(19) Europäisches Patentamt
European Patent Office
Office européen des brevets

(11) Veröffentlichungsnummer: **0 032 202**
**B1**

(12) # EUROPÄISCHE PATENTSCHRIFT

(45) Veröffentlichungstag der Patentschrift: **28.12.83**

(51) Int. Cl.³: **C 07 F 9/145**, C 07 F 9/141 //C08K5/52

(21) Anmeldenummer: **80107720.7**

(22) Anmeldetag: **08.12.80**

(54) **Verfahren zur Herstellung neutraler Phosphorigsäurearylester.**

(30) Priorität: **17.12.79 DE 2950694**

(43) Veröffentlichungstag der Anmeldung: **22.07.81 Patentblatt 81/29**

(45) Bekanntmachung des Hinweises auf die Patenterteilung: **28.12.83 Patentblatt 83/52**

(84) Benannte Vertragsstaaten: **CH DE FR GB IT LI**

(56) Entgegenhaltungen:
**EP - A - 0 008 366**
**DE - B - 2 007 070**
**US - A - 3 057 904**
**US - A - 3 068 267**

(73) Patentinhaber: **BAYER AG**
**Zentralbereich Patente, Marken und Lizenzen**
**D-5090 Leverkusen 1, Bayerwerk (DE)**

(72) Erfinder: **Hucks, Uwe**
**Am Marienstift 30**
**D-4234 Alpen (DE)**
Erfinder: **Tresper, Erhard, Dr.**
**Dahlerdyk 154**
**D-4150 Krefeld (DE)**
Erfinder: **Wulff, Claus, Dr.**
**Kaiserstrasse 248**
**D-4150 Krefeld (DE)**

**EP 0 032 202 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

Verfahren zur Herstellung neutraler Phosphorigsäurearylester

Die vorliegende Erfindung betrifft eine Verfahren zur Herstellung neutraler Phosphorigsäurearylester durch Umsetzung von Phosphortrihalogeniden, Phosphorigsäuremonoesterdihalogeniden oder Phosphorigsäurediesterhalogeniden mit Hydroxyarylverbindungen.

Es ist bekannt, Triphenylphosphite durch Umsetzung von Phosphortrihalogeniden mit speziellen Phenolen in Gegenwart eines Katalysators und eines inerten organischen Verdünnungsmittels bevorzugt bei Temperaturen von etwa 150 bis 200°C herzustellen (DE—AS 2 028 878).

Weiterhin ist bekannt, Triarylphosphite aus Phenol und Phosphortrichlorid dadurch herzustellen, daß man die drei Stufen der Reaktion getrennt in hintereinandergeschalteten Anlageteilen ablaufen läßt, die sich durch fallende Drücke und steigende Temperaturen unterscheiden (DE—AS 2 007 070).

Nachteilig bei den oben geschilderten Umsetzungen sind die hohen Temperaturen, bei denen die Reaktionen durchgeführt werden (vgl. die Beispiele der DE—AS 2 028 878) und die insbesondere gegen Ende der Reaktion notwendig sind, um das gebildete Chlorwasserstoffgas aus dem Reaktionsgemisch zu entfernen (vgl. die Beispiele der DE—AS 2 007 070).

Darüber hinaus sind zur Erreichung hoher Ausbeuten sehr lange Reaktionszeiten erforderlich, wodurch die Bildung von Nebenprodukten gefördert und die Produktqualität (z.B. Farbe) verschlechtert wird. Für die Gewinnung reiner, insbesondere von Katalysatoren befreiter Produkte sind technisch aufwendige Reinigungsoperationen notwendig, wie Destillation der teilweise hochsiedenden Ester unter Vakuum oder Umkristallisation der Ester in geeigneten Lösungsmitteln.

Ein besonderer Nachteil bei den oben beschriebenen Verfahren ist die Bildung von Chlorwasserstoffgas. Wegen der dadurch hervorgerufenen Korrosion werden an die Materialien der Anlage, in denen die Ester hergestellt werden, hohe Anforderungen gestellt. Zudem müssen spezielle Vorrichtungen vorhanden sein, in denen das gebildete Chlorwasserstoffgas aufgefangen und beispielsweise in Wasser absorbiert wird.

Verfahren zur Herstellung von Phosphorigsäureestern sind außerdem bekannt aus der europäischen Patentanmeldung 757 sowie den US-Patenten 3057904 und 3068267. Während in der europäischen Patentanmeldung 757 ein Verfahren zur Herstellung von Diarylphosphiten durch Umsetzung von Phosphortrihalogeniden mit Hydroxyaromaten in Gegenwart eines stickstoffhaltigen Katalysators und ebenfalls in Gegenwart eines Lösungsmittels beschrieben wird, wird in der US-Patentschrift 3057904 die Herstellung von trivalenten Phosphorsäuren durch Umsetzung von trivalenten Phosphorhalogeniden mit Alkoholen in Gegenwart eines Übershußes an tertiären Aminen beansprucht. In der US-Patentschrift 3068267 wird ein Verfahren zur Herstellung von Trialkylphosphiten durch Umsetzung von Phosphortrichlorid mit Alkohol in einem inerten Lösungsmittel in Gegenwart eines tertiären Amins beschrieben.

Es wurde nun ein Verfahren zur Herstellung neutraler Phosphorigsäurearylester der allgemeinen Formel

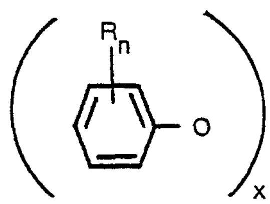

$(Z-O)_{3-x}$ P (I),

in der

R für Wasserstoff, Halogen oder eine Nitrilgruppe oder einen Alkyl-, Alkoxy-, Phenoxy- oder einen gegebenenfalls annellierten Phenylrest oder für ein durch Heteroatome unterborchenes annelliertes aromatisches Ringsystem steht,

n eine ganze Zahl von 1 bis 5 bedeutet und die Reste R gleich oder verschieden sein können,

x für eine ganze Zahl von 1 bis 3 steht,

Z für einen Alkylrest oder einen Rest der Formel

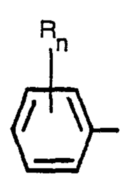

worin

R und n die obige Bedeutung aufweisen und nach dem Phasengrenzflächenverfahren durch Umsetzung von Phosphortrihalogeniden, Phosphorigsäuremonoesterdihalogeniden oder Phosphorigsäurediesterhalogeniden der Formeln (II) bis (IV)

| $PHal_3$ | $ZOPHal_2$ | $(ZO)_2PHal$ |
|---|---|---|
| (II) | (III) | (IV), |

in denen

Z die bereits für Formel (I) angegebene Bedeutung besitzt und Hal Fluor, Chlor und/oder Brom darstellt, mit Hydroxyarylverbindungen der allgemeinen Formel

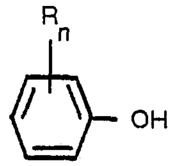

(V) ,

in der

R und n die bereits für Formel (I) angegebenen Bedeutungen haben, im Überschuß, bezogen auf die Phosphorhalogenidverbindung, gefunden, das dadurch gekennzeichnet ist, daß man einen Überschuß an wäßriger Alkali- und/oder Erdalkalihydroxidlösung oder -suspension einsetzt, wobei ein inertes organisches, mit Wasser nicht mischbares Lösungs und/oder Verdünnungsmittel in solchen Mengen anwesend ist, daß 5 bis 50 gew.-%ige Lösungen des neutralen Phosphorigsäurearylesters entstehen und man nach der Umsetzung die organische Phase abtrennt und den entstandenen Phosphorigsäurearylester durch Entfernung des Lösungs- und/oder Verdünnungsmittels isoliert.

Als Alkylreste kommen beispielsweise solche mit 1 bis 20 Kohlenstoffatomen, bevorzugt mit 1 bis 4 Kohlenstoffatomen, in Betracht. Beispielsweise werden genannt: Methyl, Ethyl, n-Propyl, iso-Propyl, n-Butyl, iso-Butyl, tert.-Butyl, n-Pentyl, n-Hexyl, n-Octyl, n-Decyl, n-Dodecyl. Besonders bevorzugt sind Alkylrest mit 3 bis 4 Kohlenstoffatomen, wie iso-Propyl, iso-Butyl und tert.-Butyl.

Als Alkoxyreste kommen beispielsweise solche mit 1 bis 20 Kohlenstoffatomen, bevorzugt mit 1 bis 4 Kohlenstoffatomen, in Betracht. Beispielsweise werden genannt: Methoxy, Ethoxy, n-Propoxy, iso-Propoxy, n-Butoxy, iso-Butoxy, tert.-Butoxy und Hexoxy.

Besonders bevorzugt sind Alkoxyreste mit 1 bis 3 Kohlenstoffatomen, wie Methoxy, Ethoxy und iso-Propoxy.

Als Phenoxyreste kommen beispielsweise solche mit 6 bis 12 Kohlenstoffatomen in Betracht, bevorzugt der unsubstituierte Phenoxyrest.

Als gegenbenenfalls annellierte Phenylreste kommen beispielsweise solche mit 6 bis 12 Kohlenstoffatomen, bevorzugt mit 6 Kohlenstoffatomen, in Betracht, wobei der unsubstituierte Phenylrest bevorzugt ist.

Als durch Heteroatome, wie Stickstoff, Schwefel oder Sauerstoff unterbrochene annelierte Ringsysteme kommen beispielsweise solche mit 8 bis 9 Kohlenstoffatomen in Betracht. Beispielsweise werden genannt: 8-Hydroxychinolin, 7-Hydroxythionaphthen, 7-Hydroxybenzofuran.

Als Phosphortrihalogenide der Formel (II) können in das erfindungsgemäße Verfahren beispielsweise Phosphortrichlorid oder Phosphortribromid eingesetzt werden. Bevorzugt wird Phosphortrichlorid eingesetzt.

Als Phosphorigsäuremonoesterdihalogenide der Formel (III) und Phoshporigsäurediesterhalogenide der Formel (IV) kommen beispielsweise solche in Betracht, wie sie durch Reaktion von Phosphortrihalogen mit einem Überschuß organischer Hydroxyverbindungen erhalten werden können. Als beispiele werden genannt: Phosphorigsäuremonoethylesterdichlorid, Phosphorigsäure-mono-2-ethylhexylesterchlorid und Phosphorigsäurediphenylestermonochlorid.

Reaktionspartner für die Phosphorverbindungen der Formeln (II) bis (IV) sind nach dem erfingungsgemäßen Verfahren Hydroxyarylverbindungen der allgemeinen Formel

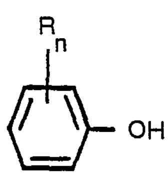

(V) ,

in der

R und n die für Formel (I) angegebene Bedeutung haben.

Zum Beispiel werden als Hydroxyarylverbindungen der Formel (V) genannt: Phenol, o-, m- und p-Kresol, o-, m- und p-Isopropylphenol, o-, m- und p-sec.-Butylphenol, o-, m- und p-tert.-Butylphenol, p-iso-Octylphenol, o-, m- und p-n-Nonylphenol, 2-Ethoxyphenol, 4-Phenoxyphenol, 4-Phenylphenol, o- und p-Chlorphenol, o- und p-Bromphenol, sym.-Tribromphenol, $\alpha$-Naphthol und 8-Hydroxychinolin.

Die Hydroxyarylverbindungen können allein oder auch in beliebigen Mischungen miteinander in das erfindungsgemäße Verfahren eingesetzt werden.

In das erfindungsgemäße Verfahren wird üblicherweise ein Übershuß an Hydroxyarylverbindung, bezogen auf 1 Äquivalent Phosphorhalogenidverbindung, eingesetzt. Beispielsweise können 1,01 bis 4 Mol, vorzugsweise 1,02 bis 1,5 Mol Hydroxyarylverbindung pro Äquivalent Phosphorhalogenidverbindung eingesetzt werden.

Als Lösungs- und/oder Verdünnungsmittel werden in das erfindungsgemäße Verfahren unter den Reaktionsbedingungen inerte organische Verbindungen eingesetzt, die mit Wasser nicht mischbar sind. Als Beispiele werden genannt: Benzol, Toluol, Xylol und halogenierte Kohlenwasserstoffe mit 1 bis 10 Kohlenstoffatomen, bevorzugt mit 1 bis 6 Kohlenstoffatomen, wie Chlorbenzol, Methylenchlorid und 1,2-Dichlorethan. Bevorzugt werden in das erfindungsgemäße Verfahren Toluol, Chlorbenzol und/oder Methylenchlorid eingesetzt.

Bei einer besonders vorteilhaften Ausführungsform des erfindungsgemäßen Verfahrens werden die Hydroxyarylverbindungen, die an der Reaktion teilnehmen oder die bei der Reaktion entstehenden Ester als Lösungsmittel verwendet. Voraussetzung hierfür ist, daß die Schmelzoder Stockpunkte dieser Verbindungen unterhalb der Reaktionstemperatur liegen.

Die Lösungsmittel und/oder Verdünnungsmittel werden in solchen Mengen eingesetzt, daß 5 bis 50 gew.-%ige Lösungen, bevorzugt 15 bis 30 gew.-%ige Lösungen, der neutralen Phosphorigsäurearylester in den eingesetzten Lösungsmitteln und/oder Verdünnungsmitteln entstehen.

Es ist ein besonderes Merkmal des erfindungsgemäßen Verfahrens, daß man die Umsetzung in Gegenwart wäßriger Alkali- und/oder Erdalkalihydroxidlösungen oder -suspensionen durchführt.

Als Alkali- und/oder Erdalkalihydroxide können beispielsweise solche des Natriums, Kaliums und/oder Calciums eingesetzt werden. Bevorzugt wird nach dem erfindungsgemäßen Verfahren Natriumhydroxid eingesetzt.

Das Alkali- und/oder Erdalkalihydroxid wird im Uberschuß, bezogen auf die Phosphorhalogenidverbindung, eingesetzt. Beispielsweise können 1,01 bis 2 Mol, vorzugsweise 1,01 bis 1,25 Mol, Alkali- und/oder Erdalkalihydroxid pro Äquivalent Phosphorhalogenidverbindung eingesetzt werden.

Die Gehalte der wäßrigen Alkali- und/oder Erdalkalihydroxidlösungen oder -suspension an reinem Alkali- und/oder Erdalkalihydroxid können stark schwanken. Vorzugsweise werden Konzentrationen im Bereich von 1 bis 60 Gew.-% gewählt.

Da das erfindungsgemäße Verfahren in Gegenwart von überschüssigem Alkali- und/oder Erdalkalihydroxid durchgeführt wird, liegt der pH-Wert des Reaktionsgemisches im basischen Bereich. Der pH-Wert ist abhängig von der Acidität der verwendeten Hydroxyarylverbindung und des jeweiligen Alkali- und/oder Erdalkalihydroxidüberschusses.

Die Verwendung hoher Alkali- und/oder Erdalkalihydroxidkonzentrationen in der wäßrigen Lösung oder Suspension stellt eine besondere Ausführungsform des erfindungsgemäßen Verfahrens dar. Das während der Reaktion entstehende Alkali- und/oder Erdalkalihalogenid scheidet sich dann nach Erreichen der Sättigungsgrenze in fester Form ab und kann nach beendeter Reaktion nach bekannten Verfahren, beispielsweise durch Filtration oder Zentrifugation, z.B. mit Drehfilter, Schälzentrifugen oder ähnlichen Apparaten abgetrennt werden.

Eine Erhöhung der Mengen an wäßriger Reaktionsphase durch Zugabe gesättigter Alkaliund/oder Erdalkalihalogenidlösungen, zweckmäßigerweise der wäßrigen Reaktionsphase, die nach Abtrennen des ausgefallenen Alkali- und/oder Eralkalihalogenids und der organischen Phase erhalten wird, kann die Umsetzung günstig beeinflussen.

Durch diese Verfahrensvarianten werden die Belastungen der Abwässer mit Alkali- und/oder Erdalkalihalogenid erheblich vermindert.

Es hat sich gezeigt, daß die Reaktion in der Regel ohne Katalysatoren mit ausreichender Ausbeute und genügender Geschwindigkeit abläuft. Durch Katalysatoren kann jedoch insbesondere die Reaktionsgeschwindigkeit erhöht werden. Als Katalysatoren, die insbesondere die Reaktionsgeschwindigkeit erhöhen können, kommen beispielsweise tert.-Amine, quaternäre Ammonium-, Phosphonium- und Sulfoniumverbindungen, wie Triethylamin, n-Tributylamin oder Tetramethylammoniumhydroxid in Frage. Die Katalysatorkonzentration kann in weiten Bereichen variiert werden, vorzugsweise kann man 0,001 bis 0,1 Mol Katalysator pro Mol eingesetzte Hydroxyarylverbindung verwenden.

Die Reaktionstemperaturen des erfindungsgemäßen Verfahrens können in weiten Bereichen schwanken. Besonders vorteilhaft läßt sich das erfindungsgemäß Verfahren bei Temperaturen von 5 bis 95°C, vorzugsweise bei 10 bis 50°C, durchführen. Die Reaktionszeiten betragen üblicherweise, je nach Reaktionsführung und Temperatur, bei der die Umsetzung durchgeführt wird, etwa 5 bis 90 Minuten und können durch Verwendung von Katalysatoren verkürzt werden.

Das erfindungsgemäße Verfahren kann man beispielweise in der Weise durchführen, daß man die Hydroxyarylverbindung mit der Alkali- und/oder Erdalkalihydroxydlösung oder -suspension, gegebenenfalls unter Wasserzugabe oder Zugabe gesättigter Alkali- und/oder Erdalkalihalogenidlösungen oder -suspension in einem kühlbaren Rührkessel mischt und unter haftigem Rühren mit dem im organischen inerten Lösungsmittel gelösten Phosphortrihalogenid, Phosphorigsäuremonoester-

dihalogenid oder Phosphorigsäurediesterhalogenid mit solcher Geschwindigkeit vereinigt, daß die Reaktionstemperatur durch Kühlen gesteurt werden kann.

Die Aufarbeitung des Reaktionsgemisches kann nach beendeter Umsetzung in bekannter Weise erfolgen. Die nach der Reaktion vorliegende Emulsion kann, gegebenenfalls durch Filtration von ausgeschiedenen Alkali- und/oder Erdalkalihalogeniden befreit und dann aufgetrennt werden. Die organische Phase kann dann, beispielsweise in Mischer-Scheider-Apparaten oder Separatoren mit Säure und danach mit Wasser elektrolytfrei gewaschen werden. Das inerte organischen Lösungsmittel kann z.B. durch Abdestillieren entfernt werden.

Der verbleibende Rückstand kann einer weiteren Reinigung, etwa durch Destillation oder Kristallisation, unterzogen werden.

Eine besondere Reinigung der erhaltenen Phosphorigsäurearylester kann jedoch unterbleiben, wenn man von reinen Ausgangsverbindungen ausgeht und unter Inertgasatmosphäre, wie Stickstoff, arbeitet. Dann genügt es, das organische Lösungsmittel abzudampfen, wobei als Rückstände die reinen, farbhellen Phosphorigsäurearylester anfallen.

Das erfindungsgemäße Verfahren läßt sich kontinuierlich oder diskontinuierlich durchführen.

Nach dem erfindungsgemäßen Verfahren können neutrale Phosphorigsäurearylester in guten Ausbeuten und hohen Reinheiten hergestellt werden.

Die Reaktionstemperaturen des erfindungsgemäßen Verfahrens können niedrig und die Reaktionszeiten kurz gehalten werden, wodurch sich das Verfahren besonders wirtschaftlich gestaltet.

Weiterhin wird bei dem erfindungsgemäßen Verfahren kein Chlorwasserstoffgas freigesetzt. Dadurch entfallen spezielle Vorrichtungen, in denen das Chlorwasserstoffgas aufgefangen und absorbiert werden muß. Außerdem brauchen die Materialien der Anlage, in der die Phosphorigsäurearylester gemäß der Erfindung hergestellt werden, nicht unbedingt aus besonders korrosionfesten Materialien zu bestehen. Auch dies trägt zur Wirtschaftlichkeit des erfindingsgemäßen Verfahrens bei.

Daneben ist es außerordentlich überraschend, daß bei der erfindungsgemäßen Umsetzung von Phosphortrihalogeniden, Phosphorigsäuremonoesterdihalogeniden oder Phosphorigsäurediesterhalogeniden mit Hydroxyarylverbindungen in guten Ausbeuten neutrale Phosphorigsäurearylester gebildet werden, obwohl ein Überschuß an wäßriger Alkali- und/oder Erdalkalihydroxydlösung oder -suspension eingesetzt wird.

Es war nämlich zu erwarten, daß die gebildeten Phosphorigsäurearylester in Gegenwart von Alkalien sofort zu Phosphorigsäuredi- bzw. monoester hydrolysiert werden, wie dies in Houben-Weyl, Methoden der organischen Chemie, Band VII/2, Seiten 7, 30, 31, 79 (1964) beschrieben ist.

Die erfindungsgemäß hergestellten neutralen Phosphorigsäurearylester können vor allem als Stabilisatoren für Polymere verwendet werden, um diese gegen Abbau, Wärme, Licht oder Einwirkungen von Sauerstoff oder sauerstoffhaltigen Verbindungen zu schützen (Kirk-Othmer Encyclopädie of Chemical Technology, 2nd Edition, Vol. 17, S. 519).

Die nachstehenden Beispiele sollen das erfindungsgemäße Verfahren verdeutlichen, ohne es jedoch auf diese Beispiele einzuschränken.

## Beispiel 1

In einem Dreihalskolben mit Rührer, Tropftrichter und Thermometer werden 169,4 g Phenol mit 150 ml Toluol, 120 g Wasser und 155,6 g 45%iger (1,75 Mol) Natronlauge vorgelegt. Unter heftigem Rühren wird innerhalb von 15 Minuten eine Lösung aus 68,7 g Phosphortrichlorid und 100 ml Toluol zugetropft. Die Temperatur wird durch Kühlen zwischen 25 und 30°C gehalten. Es wird 30 Minuten bei 30°C nachgeführt. Die Phasen werden getrennt. Die organische Schicht wird 3 mal mit Wasser ausgewaschen. Das Toluol wird abdestilliert und der Rückstand im Hochvakuum fraktioniert. Es werden 132 g Triphenylphosphit erhalten. Die Ausbeute beträgt 86% der Theorie; die Reinheit >99%.

## Beispiele 2 bis 4

Diese wurden, wie in Beispiel 1 beschrieben, durchgeführt. Die wichtigsten Parameter und die Ergebnisse sind in nachstehender Tabelle zusammengefaßt.

| Beispeil | Mol Hydroxyarylverb. pro Mol $PCl_3$ | | Mol NaOH pro Mol $PCl_3$ | % Ester in Toluollösung | Ausbeute % d.Th. |
|---|---|---|---|---|---|
| 2 | 3,6 Mol | 2,4-Di-tert.-butylphenol | 3,5 Mol | 40,5 | 85 |
| 3 | 3,6 Mol | 2,4,6-Triisopropylphenol | 3,5 Mol | 39 | 77 |
| 4 | 2,4 Mol | Phenol* | 2,33 Mol* | 37 | 86 |

* jeweils pro Mol Phosphorigsäuremono-2-ethylhexylesterchlorid

Die Reinheiten der Produkte liegen bei >99%.

**Patenansprüche**

1. Verfahren zur Herstellung neutraler Phosphorigsäurearylester der allgemeinen Formel

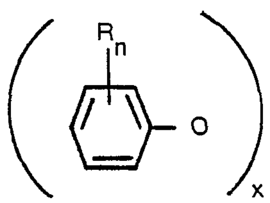

$(Z-O)_{3-x}P$ (I),

in der

R für Wasserstoff, Halogen oder eine Nitrilgruppe oder einen Alkyl-, Alkoxy-, Phenoxy- oder einen gegebenenfalls annellierten Phenylrest oder für ein durch Heteroatome unterbrochenes annelliertes aromatisches Ringsystem steht,

n eine ganze Zahl von 1 bis 5 bedeutet und die Reste R gleich oder verschieden sein können,

x für eine ganze Zahl von 1 bis 3 steht,

Z für einen Alkylrest oder einen Rest der Formel

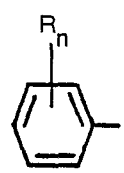

worin

R und n die obige Bedeutung aufweisen und nach dem Phasengrenzflächenverfahren durch Umsetzung von Phosphortrihalogeniden, Phosphorigsäuremonoesterdihalogeniden oder Phosphorigsäurediesterhalogeniden der Formeln (II) bis (IV)

| $PHal_3$ | $ZOPHal_2$ | $(ZO)_2PHal$ |
|---|---|---|
| (II) | (III) | (IV), |

in denen

Z die bereits für Formel (I) angegebene Bedeutung besitzt und Hal Fluor, Chlor und/oder Brom darstellt, mit Hydroxyarylverbindungen der allgemeinen Formel

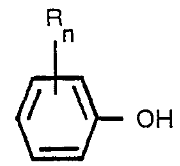

(V) ,

in der

R und n die bereits für Formel (I) angegebenen Bedeutungen haben, im Übershuß, bezogen auf die Phosphorhalogenidverbindung, dadurch gekennzeichnet ist, daß man einen Überschuß an wäßriger Alkali- und/oder Erdalkalihydroxidlösung oder -suspension einsetzt, wobei ein inertes organisches, mit Wasser nicht mischbares Lösungs und/oder Verdünnungsmittel in solchen Mengen anwesend ist, daß 5 bis 50 gew.-%ige Lösungen des neutralen Phosphorigsäurearylesters entstehen und man nach der Umsetzung die organische Phase abtrennt und den entstandenen Phosphorigsäurearylester durch Entfernung des Lösungs- und/oder Verdünnungsmittels isoliert.

2. Verfahren nach Anspruch 1, dadurch gekennzeichnet daß man die Umsetzung bei Temperaturen von 5 bis 95°C durchführt.

3. Verfahren nach Anspruch 1, dadurch gekennzeichnet, daß man die Umsetzung bei Temperaturen von 10 bis 50°C durchführt.

4. Verfahren nach Ansprüchen 1 bis 3, dadurch gekennzeichnet, daß die Umsetzung mit einem Überschuß an wäßriger Alkali- und/oder Erdalkalihydroxidlösung oder -suspension von 1,01 bis 2 Mol pro Äquivalent Phosphorhalogenidverbindung durchgeführt wird.

5. Verfahren nach Ansprüchen 1 bis 4, dadurch gekennzeichnet, daß als Phosphorhalogenidverbindung Phosphortrichlorid eingesetzt wird.

6. Verfahren nach Ansprüchen 1 bis 5, dadurch gekennzeichnet, daß als Alkalihydroxid Natriumhydroxid eingesetzt wird.

7. Verfahren nach Ansprüchen 1 bis 6, dadurch gekennzeichnet, daß als inerte organische, mit Wasser nicht mischbare Lösungs- und/oder Verdünnungsmittel Toluol, Chlorbenzol und/oder Methylenchlorid eingesetzt werden.

**Revendications**

1. Procédé de production d'esters aryliques neutres d'acide phosphoreux de formule générale

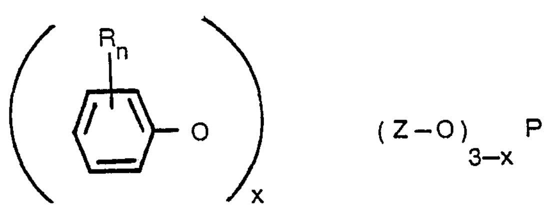

(I) ,

dans laquelle

R désigne l'hydrogène, un halogène ou un groupe nitrile ou un rest alkyle, alkoxy, phénoxy ou phényle éventuellement condensé ou un noyau aromatique condensé interrompu par des hétéroatomes,

*n* est un nombre entier de 1 à 5 et les restes R peuvent être égaux ou différents,

*x* est un nombre entier de 1 à 3.

Z est un reste alkyle ou un reste de formule

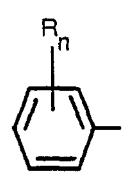

,

dans laquelle

R et *n* ont la définition donnée ci-dessus par le procédé à l'interface entre phases par réaction de trihalogénures de phosphore, de dihalogénures de monoesters d'acide phosphoreux ou d'halogénures de diesters d'acide phosphoreux de formules (II) à (IV)

$PHal_3$ (II) $ZOPHal_2$ (III) $(ZO)_2PHal$ (IV)

dans lesquelles

Z possède la définition déjà indiquée pour la formule (I) et Hal représente le fluor, le chlore et/ou le brome, avec des composés hydroxyaryliques de formule générale

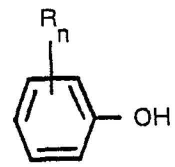

(V) ,

dans laquelle

R et *n* ont les définitions déjà indiquées pour la formule (I), en excès par rapport à l'halogénure de phosphore, caractérisé en ce qu'on utilise en excès de solution ou suspension aqueuse d'hydroxyde alcalin et/ou alcalinoterreux, en présence d'un solvant et/ou d'un diluant organique inerte non miscible à l'eau en quantités choisies de manière à former des solutions à 5—50% en poids de l'ester arylique neutre d'acide phosphoreux et, après la réaction, on sépare la phase organique et on isole l'ester arylique d'acide phosphoreux formé, par élimination du solvant et/ou du diluant.

2. Procédé suivant la revendication 1, caractérisé en ce qu'on conduit la réaction à des températures de 5 à 95°C.

3. Procédé suivant la revendication 1, caractérisé en ce qu'on conduit la réaction à des températures de 10 à 50°C.

4. Procédé suivant les revendications 1 à 3, caractérisé en ce qu'on conduit la réaction avec un excès de solution ou de suspension aqueuse d'hydroxyde alcalin et/ou alcalino-terreux de 1,01 à 2 moles par équivalent d'halogénure de phosphore.

5. Procédé suivant les revendications 1 à 4, caractérisé en ce qu'on utilise comme halogénure de phosphore le trichlorure de phosphore.

6. Procédé suivant les revendications 1 à 5, caractérisé en ce qu'on utilise l'hydroxyde de sodium comme hydroxyde alcalin.

7. Procédé suivant les revendications 1 à 6, caractérisé en ce qu'on utilise comme solvants et/ou diluants organiques inertes non miscibles à l'eau, le toluène, le chlorobenzène et/ou le chlorure de méthylène.

## Claims

1. Process for the preparation of neutral phosphorus acid aryl esters of the general formula

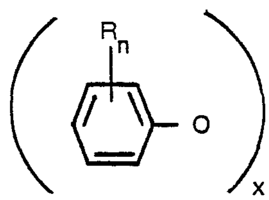

$(Z-O)_{3-x}P$ (I) ,

in which

R represents hydrogen, halogen or a nitrile group or an alkyl, alkoxy or phenoxy radical or an optionally fused phenyl radical, or a fused aromatic ring system which is interrupted by heteroatoms,

n deontes an integer from 1 to 5, and the radicals R can be identical or different,

x represents an integer from 1 to 3,

Z represents an alkyl radical or a radical of the formula

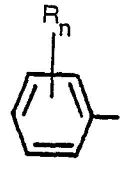

wherein

R and n have the above meaning, and by the phase boundary process, by reacting phosphorus trihalides, phosphorous acid monoester dihalides or phosphorous acid diester halides of the formulae (II) to (IV)

$PHal_3$ (II)    $ZOPHal_2$ (III)    $(ZO)_2PHal$ (IV)

in which

Z has the meaning already given in the case of formula (I) and Hal represents fluorine, chlorine and/or bromine, with hydroxyaryl compounds of the general formula

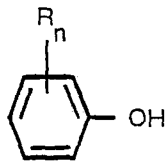

(V) ,

in which

R and n have the meanings already given in the case of formula (I), in excess, based on the phosphorus halide compound, characterised in that an excess of aqueous alkali metal hydroxide solution or suspension and/or alkaline earth metal hydroxide solution or suspension is employed, an inert organic water-immiscible solvent and/or diluent being present in amounts such that 5 to 50% strength by weight solutions of the neutral phosphorous acid aryl ester are formed, and, after the reaction, the organic phase is separated off and the phosphorous acid aryl ester formed is isolated by removing the solvent and/or diluent.

2. Process according to Claim 1, characterised in that the reaction is carried out at temperatures of 5 to 95°C.

3. Process according to Claim 1, characterised in that the reaction is carried out at temperatures of 10 to 50°C.

4. Process according to Claims 1 to 3, characterised in that the reaction is carried out with an excess of aqueous alkali metal hydroxide solution or suspension and/or alkaline earth metal hydroxide solution or suspension of 1.01 to 2 mols per equivalent of phosphorus halide compound.

5. Process according to Claims 1 to 4, characterised in that phosphorus trichloride is employed as the phosphorus halide compound.

6. Process according to Claims 1 to 5, characterised in that sodium hydroxide is employed as the alkali metal hydroxide.

7. Process according to Claims 1 to 6, characterised in that toluene, chlorobenzene and/or methylene chloride are employed as inert organic water-immiscible solvents and/or diluents.